# EUROPEAN PATENT APPLICATION

(11) **EP 4 307 572 A1**
(43) Date of publication of application: **17.01.2024**
(21) Application number: 22184442.6
(22) Date of filing: 12.07.2022
(51) Int. Cl.: H04B 7/0404, H04B 7/06, H04B 7/0408, H04B 7/08

(54) **METHOD FOR BEAM MANAGEMENT**

(71) Applicant: Nokia Technologies Oy, 02610 Espoo (FI)
(72) Inventor: MARCONE, Alessio, Munich (DE); NIELSEN, Kim, Storvorde (DK); SABOURI-SICHANI, Faranaz, Aalborg (DK); SANCHEZ, Laura Luque, Nibe (DK); AHMADIAN TEHRANI, Amir Mehdi, Munich (DE); DHERE, Amol, Gistrup (DK)
(74) Representative: Nokia EPO representatives

(57) **Abstract**

An apparatus comprising: a plurality of antenna panels for receiving beams; means for receiving reference signals; means for determining, based on measurements of said reference signals, a first parameter indicative of at least channel quality for a beam on each antenna panel, wherein a value of said first parameter is determined for each antenna panel according to a predetermined beam scanning procedure; means for determining, at least for a plurality of non-serving antenna panels, a value of a second parameter based on a difference of values of the first parameters between a beam on a serving antenna panel and a beam on a particular non-serving antenna panel; and means for pausing, based on the determined values of the first and/or the second parameter, the predetermined beam scanning procedure for one or more antenna panels.

## Description

### TECHNICAL FIELD

The present invention relates to beam management procedures.

### BACKGROUND

One of the new service categories introduced in 5G NR networks is ultra-reliable low-latency communication (URLLC). The two latest versions of the 5G standard, 3GPP Release 15 and 16, have built the physical implementation of URLLC to meet the two conflicting requirements of reliability and latency.

Especially when considering the operating of a user equipment (UE) in the Frequency Range 2 (FR2; 24.25 GHz to 52.6 GHz) including the mmWave range, the UE implementation is expected to have multiple antenna panels (Multi-Panel UE, MPUE) to perform beam steering over a large solid angle aiming to maximize the reliability. Depending on the configuration of the UE, the MPUE may be provided with multiple panels, but for some MPUEs only one panel can be activated at a time. Such MPUE requires a long time to scan for other potential links since it must do the scan sequentially. The scan involves measuring the power levels of the received reference signals for assisting in uplink beam selection.

However, the MPUE may reside in such channel conditions where a possible change to a different panel and/or beam provides only a small improvement in signal quality, but it does not actually improve the link throughput. An example indicator for improved link quality is when the signal quality improvement is to allow a higher modulation and coding scheme (MCS) and achieve higher performance. In such channel conditions, the MPUE performing the scan and the measurements only consumes power without any benefit in link performance.

### SUMMARY

Now, an improved method and technical equipment implementing the method has been invented, by which the above problems are alleviated. Various aspects include a method, an apparatus and a non-transitory computer readable medium comprising a computer program, or a signal stored therein, which are characterized by what is stated in the independent claims. Various details of the embodiments are disclosed in the dependent claims and in the corresponding images and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is provided an apparatus comprising a plurality of antenna panels for receiving beams; means for receiving reference signals; means for determining, based on measurements of said reference signals, a first parameter indicative of at least channel quality for a beam on each antenna panel, wherein a value of said first parameter is determined for each antenna panel according to a predetermined beam scanning procedure; means for determining, at least for a plurality of non-serving antenna panels, a value of a second parameter based on a difference of values of the first parameters between a beam on a serving antenna panel and a beam on a particular non-serving antenna panel; and means for pausing, based on the determined values of the first and/or the second parameter, the predetermined beam scanning procedure for one or more antenna panels.

According to an embodiment, the apparatus comprises means for comparing the values of the second parameter to a first threshold value, wherein said first threshold value is a difference between the current value of the first parameter measured on the serving antenna panel and a minimum value of the first parameter required for a change of a modulation and coding scheme; wherein said means for pausing is configured to pause the predetermined beam scanning procedure for antenna panels having the value of the second parameter below the first threshold.

According to an embodiment, the apparatus comprises means for comparing the value of the first parameter measured on the serving panel to the value of the first parameter measured on the particular non-serving panel; wherein said means for pausing is configured to pause the predetermined beam scanning procedure for the particular non-serving antenna panels having the value of the first parameter below the value of the first parameter for the serving antenna panel by at least a second threshold.

According to an embodiment, the apparatus comprises means for continuing to measure the first parameter indicative of the channel quality on the serving antenna panel; means for comparing the value of the first parameter measured on the serving panel to a third threshold value, and means for continuing the predetermined beam scanning procedure across all antenna panels in response to the value of the first parameter measured on the serving panel is below the third threshold value.

According to an embodiment, the second threshold value is based on the modulation and coding scheme used on the serving antenna panel.

According to an embodiment, the apparatus comprises means for continuing the predetermined beam scanning procedure across all antenna panels in response to a timer set upon said pausing expires.

According to an embodiment, the apparatus comprises means for continuing the predetermined beam scanning procedure across all antenna panels in response to a change of a beam on the serving antenna panel.

According to an embodiment, said first parameter indicative of at least the channel quality is signal-to-interference+noise ratio (SINR) or reference signal received power (RSRP) measured on a configured reference signal from a serving network node.

A method according to a second aspect comprises receiving, by a user equipment comprising a plurality of antenna panels for receiving beams, reference signals; determining, based on measurements of said reference signals, a first parameter indicative of at least channel quality for a beam on each antenna panel, wherein a value of said first parameter is determined for each antenna panel according to a predetermined beam scanning procedure; determining, at least for a plurality of non-serving antenna panels, a value of a second parameter based on a difference of values of the first parameters between a beam on a serving antenna panel and a beam on a particular non-serving antenna panel; and pausing, based on the determined values of the first and/or the second parameter, the predetermined beam scanning procedure across one or more antenna panels.

An apparatus according to a third aspect comprises a plurality of antenna panels, at least one processor and at least one memory, said at least one memory stored with computer program code thereon, the at least one memory and the computer program code configured to, with the at least one processor, cause the apparatus at least to perform: receive reference signals; determine, based on measurements of said reference signals, a first parameter indicative of at least channel quality for a beam on each antenna panel, wherein a value of said first parameter is determined for each antenna panel according to a predetermined beam scanning procedure; determine, at least for a plurality of non-serving antenna panels, a value of a second parameter based on a difference of values of the first parameters between a beam on a serving antenna panel and a beam on a particular non-serving antenna panel; and pause, based on the determined values of the first and/or the second parameter, the predetermined beam scanning procedure for one or more antenna panels.

Computer readable storage media according to further aspects comprise code for use by an apparatus, which when executed by a processor, causes the apparatus to perform the above methods.

### BRIEF DESCRIPTION OF THE DRAWINGS

For a more complete understanding of the example embodiments, reference is now made to the following descriptions taken in connection with the accompanying drawings in which:
Fig. 1 shows a schematic block diagram of an apparatus for incorporating the embodiments;
Fig. 2 shows schematically a layout of an apparatus according to an example embodiment;
Fig. 3 shows a part of an exemplifying radio access network;
Fig. 4 shows an example of a UE with multiple antenna panels;
Fig. 5a shows a sequential UEscan, where a MPUE comprising four panels PI, P2, P3, P4 activates one of the panels in alternating manner;
5b shows an example of radiation pattern of the MPUE of Fig. 5a;
Fig. 6 shows an example of three phases of a known beam alignment procedure;
Fig. 7 shows an example of received signal power measurements at a UE provided with 4 orthogonal receivers and simultaneous reception;
Fig. 8 shows a flow chart for a beam management procedure according to an embodiment;
Fig. 9 shows a flow chart for a beam management procedure in NLOS condition according to an embodiment; and
Fig. 10 shows a flow chart for a beam management procedure in LOS condition according to an embodiment.

### DETAILED DESCRIPTON OF SOME EXAMPLE EMBODIMENTS

The following describes in further detail suitable apparatus and possible mechanisms carrying out the beam management operations. While the following focuses on 5G networks, the embodiments as described further below are by no means limited to be implemented in said networks only, but they are applicable in any network supporting beam management operations.

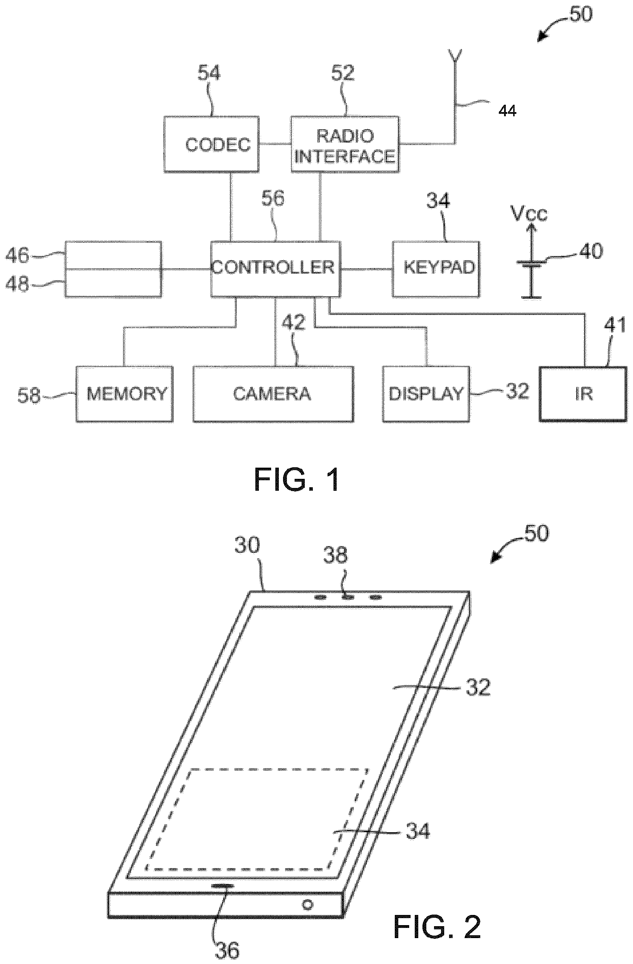

In this regard, reference is first made to Figures 1 and 2, where Figure 1 shows a schematic block diagram of an exemplary apparatus or electronic device 50, which may incorporate the arrangement according to the embodiments. Figure 2 shows a layout of an apparatus according to an example embodiment. The elements of Figs. 1 and 2 will be explained next.

The electronic device 50 may for example be a mobile terminal or user equipment of a wireless communication system. The apparatus 50 may comprise a housing 30 for incorporating and protecting the device. The apparatus 50 further may comprise a display 32 and a keypad 34. Instead of the keypad, the user interface may be implemented as a virtual keyboard or data entry system as part of a touch-sensitive display.

The apparatus may comprise a microphone 36 or any suitable audio input which may be a digital or analogue signal input. The apparatus 50 may further comprise an audio output device, such as anyone of: an earpiece 38, speaker, or an analogue audio or digital audio output connection. The apparatus 50 may also comprise a battery 40 (or the device may be powered by any suitable mobile energy device such as solar cell, fuel cell or clockwork generator). The apparatus may further comprise a camera 42 capable of recording or capturing images and/or video. The apparatus 50 may further comprise an infrared port 41 for short range line of sight communication to other devices. In other embodiments the apparatus 50 may further comprise any suitable short-range communication solution such as for example a Bluetooth wireless connection or a USB/firewire wired connection.

The apparatus 50 may comprise a controller 56 or processor for controlling the apparatus 50. The controller 56 may be connected to memory 58 which may store both user data and instructions for implementation on the controller 56. The memory may be random access memory (RAM) and/or read only memory (ROM). The memory may store computer-readable, computer-executable software including instructions that, when executed, cause the controller/processor to perform various functions described herein. In some cases, the software may not be directly executable by the processor but may cause a computer (e.g., when compiled and executed) to perform functions described herein. The controller 56 may further be connected to codec circuitry 54 suitable for carrying out coding and decoding of audio and/or video data or assisting in coding and decoding carried out by the controller.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

In the following, different exemplifying embodiments will be described using, as an example of an access architecture to which the embodiments may be applied, a radio access architecture based on Long Term Evolution Advanced (LTE Advanced, LTE-A) or new radio (NR, 5G), without restricting the embodiments to such an architecture, however. A person skilled in the art appreciates that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet protocol multimedia subsystems (IMS) or any combination thereof.

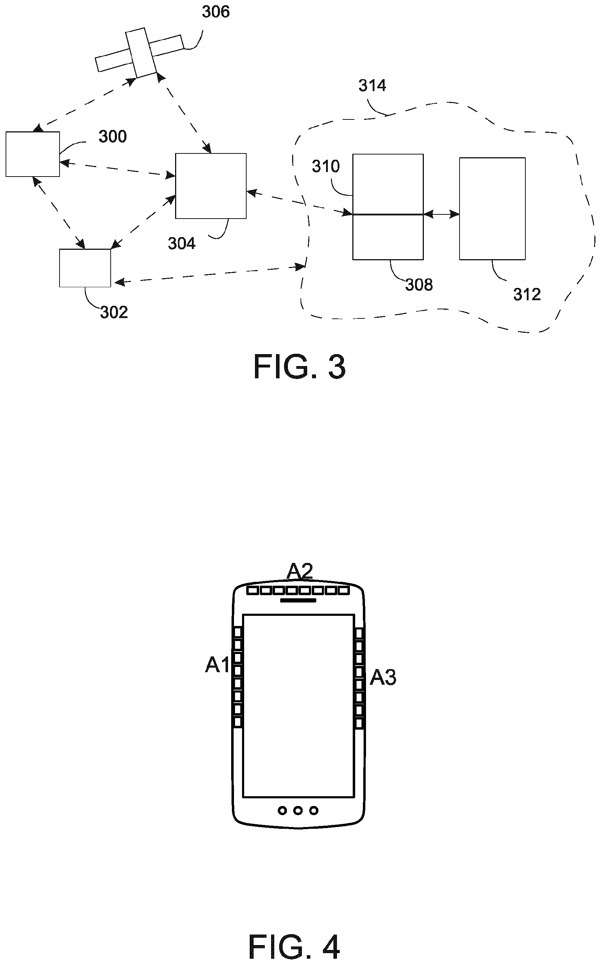

Figure 3 depicts examples of simplified system architectures only showing some elements and functional entities, all being logical units, whose implementation may differ from what is shown. The connections shown in Figure 3 are logical connections; the actual physical connections may be different. It is apparent to a person skilled in the art that the system typically comprises also other functions and structures than those shown in Figure 3. The embodiments are not, however, restricted to the system given as an example but a person skilled in the art may apply the solution to other communication systems provided with necessary properties.

The example of Figure 3 shows a part of an exemplifying radio access network.

Figure 3 shows user devices 300 and 302 configured to be in a wireless connection on one or more communication channels in a cell with an access node (such as (e/g)NodeB) 304 providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communication system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 310 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc. The CN may comprise network entities or nodes that may be referred to management entities. Examples of the network entities comprise at least an Access and Mobility Management Function (AMF).

The user device (also called a user equipment (UE), a user terminal, a terminal device, a wireless device, a mobile station (MS) etc.) illustrates one type of an apparatus to which resources on the air interface are allocated and assigned, and thus any feature described herein with a user device may be implemented with a corresponding network apparatus, such as a relay node, an eNB, and an gNB. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. Accordingly, the user device may be an IoT-device. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. The access nodes of the radio network form transmission/reception (TX/Rx) points (TRPs), and the UEs are expected to access networks of at least partly overlapping multi-TRPs, such as macro-cells, small cells, pico-cells, femto-cells, remote radio heads, relay nodes, etc. The access nodes may be provided with Massive MIMO antennas, i.e. very large antenna array consisting of e.g. hundreds of antenna elements, implemented in a single antenna panel or in a plurality of antenna panels, capable of using a plurality of simultaneous radio beams for communication with the UE. The UEs may be provided with MIMO antennas having an antenna array consisting of e.g. dozens of antenna elements, implemented in a single antenna panel or in a plurality of antenna panels. Thus, the UE may access one TRP using one beam, one TRP using a plurality of beams, a plurality of TRPs using one (common) beam or a plurality of TRPs using a plurality of beams.

The 4G/LTE networks support some multi-TRP schemes, but in 5G NR the multi-TRP features are enhanced e.g. via transmission of multiple control signals via multi-TRPs, which enables to improve link diversity gain. Moreover, high carrier frequencies (e.g., mmWaves) together with the Massive MIMO antennas require new beam management procedures for multi-TRP technology.

5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

Frequency bands for 5G NR are separated into two frequency ranges: Frequency Range 1 (FR1) including sub-6 GHz frequency bands, i.e. bands traditionally used by previous standards, but also new bands extended to cover potential new spectrum offerings from 410 MHz to 7125 MHz, and Frequency Range 2 (FR2) including frequency bands from 24.25 GHz to 52.6 GHz. Thus, FR2 includes the bands in the mmWave range, which due to their shorter range and higher available bandwidth require somewhat different approach in radio resource management compared to bands in the FR1.

The current architecture in LTE networks is fully distributed in the radio and fully centralized in the core network. The low latency applications and services in 5G require to bring the content close to the radio which leads to local break out and multiaccess edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 312, or utilize services provided by them. The communication network may also be able to support the usage of cloud services, for example at least part of core network operations may be carried out as a cloud service (this is depicted in Fig. 3 by "cloud" 314). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU) and non-real time functions being carried out in a centralized manner (in a centralized unit, CU 308).

It should also be understood that the distribution of labor between core network operations and base station operations may differ from that of the LTE or even be nonexistent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well. The gNB is a next generation Node B (or, new Node B) supporting the 5G network (i.e., the NR).

5G may also utilize non-terrestrial nodes 306, e.g. access nodes, to enhance or complement the coverage of 5G service, for example by providing backhauling, wireless access to wireless devices, service continuity for machine-to-machine (M2M) communication, service continuity for Internet of Things (IoT) devices, service continuity for passengers on board of vehicles, ensuring service availability for critical communications and/or ensuring service availability for future railway/maritime/aeronautical communications. The non-terrestrial nodes may have fixed positions with respect to the Earth surface or the non-terrestrial nodes may be mobile non-terrestrial nodes that may move with respect to the Earth surface. The non-terrestrial nodes may comprise satellites and/or HAPSs. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node 304 or by a gNB located on-ground or in a satellite.

A person skilled in the art appreciates that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

The Radio Resource Control (RRC) protocol is used in various wireless communication systems for defining the air interface between the UE and a base station, such as eNB/gNB. This protocol is specified by 3GPP in in TS 36.331 for LTE and in TS 38.331 for 5G. In terms of the RRC, the UE may operate in LTE and in 5G in an idle mode or in a connected mode, wherein the radio resources available for the UE are dependent on the mode where the UE at present resides. In 5G, the UE may also operate in inactive mode. In the RRC idle mode, the UE has no connection for communication, but the UE is able to listen to page messages. In the RRC connected mode, the UE may operate in different states, such as CELL_DCH (Dedicated Channel), CELL_FACH (Forward Access Channel), CELL_PCH (Cell Paging Channel) and URA_PCH (URA Paging Channel). The UE may communicate with the eNB/gNB via various logical channels like Broadcast Control Channel (BCCH), Paging Control Channel (PCCH), Common Control Channel (CCCH), Dedicated Control Channel (DCCH), Dedicated Traffic Channel (DTCH).

The transitions between the states are controlled by a state machine of the RRC. When the UE is powered up, it is in a disconnected mode/idle mode. The UE may transit to RRC connected mode with an initial attach or with a connection establishment. If there is no activity from the UE for a short time, eNB/gNB may suspend its session by moving to RRC Inactive and can resume its session by moving to RRC connected mode. The UE can move to the RRC idle mode from the RRC connected mode or from the RRC inactive mode.

The actual user and control data from network to the UEs is transmitted via downlink physical channels, which in 5G include Physical downlink control channel (PDCCH) which carries the necessary downlink control information (DCI), Physical Downlink Shared Channel (PDSCH), which carries the user data and system information for user, and Physical broadcast channel (PBCH), which carries the necessary system information to enable a UE to access the 5G network.

The user and control data from UE to the network is transmitted via uplink physical channels, which in 5G include Physical Uplink Control Channel (PUCCH), which is used for uplink control information including HARQ feedback acknowledgments, scheduling request, and downlink channel-state information for link adaptation, Physical Uplink Shared Channel (PUSCH), which is used for uplink data transmission, and Physical Random Access Channel (PRACH), which is used by the UE to request connection setup referred to as random access.

For the 5G technology, one of the most important design goals has been improved metrics of reliability and latency, in addition to network resilience and flexibility.

Especially when considering the operation of the UE in the Frequency Range 2 (FR2; 24.25 GHz to 52.6 GHz) including the mmWave range, the UE implementation is expected to have multiple antenna panels (Multi-Panel UE, MPUE) to perform beam steering over a large solid angle aiming to maximize the reliability. Figure 4 shows an example of a UE with multiple panels A1, A2, A3, each panel consisting of an antenna array comprising a plurality of antenna elements, such as an array of 1x8 antenna elements.

The MPUE may exhibit different implementations regarding its capabilities for simultaneous transmission/reception:
- MPUE-Assumption1: Multiple panels are implemented on a UE and only one panel can be activated at a time, with a panel switching/activation delay of few ms;
- MPUE-Assumption2: Multiple panels are implemented on a UE and multiple panels can be activated at a time and one or more panels can be used for Tx;
- MPUE-Assumption3: Multiple panels are implemented on a UE and multiple panels can be activated at a time but only one panel can be used for Tx.

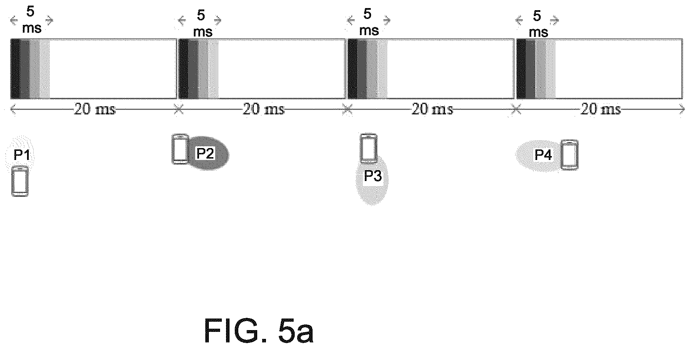

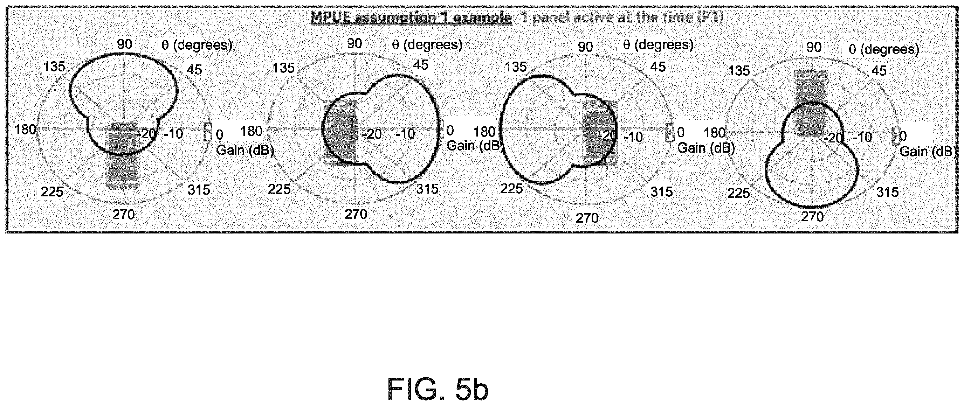

An MPUE implemented with assumption 1 (i.e. only one panel active at the time) requires a long time to scan for other potential links since it must do the scan sequentially. The synchronization signal (SS) burst is typically repeated with a periodicity of 20 ms and lasts 5 ms. It may contain up to 64 synchronization signal blocks (SSB) of 4 symbols each. The sequential UE scan is illustrated in Figure 5a, where a MPUE comprising four panels P1, P2, P3, P4 activates one of the panels in alternating manner according to a Round Robin (RR) scheme for carrying a scanning of a SS burst with the periodicity of 20 ms. Figure 5b, in turn, shows an example of radiation pattern of MPUE assumption 1.

In order to obtain full beam gain, a beam alignment procedure according to TS 38.214 3GPP TSG RAN WG1, "NR; Physical layer procedures for data," 03.04.2020, relies on a 3-step approach, which includes several measurements the UE has to perform to aid the network with management of the gNB and UE beams.

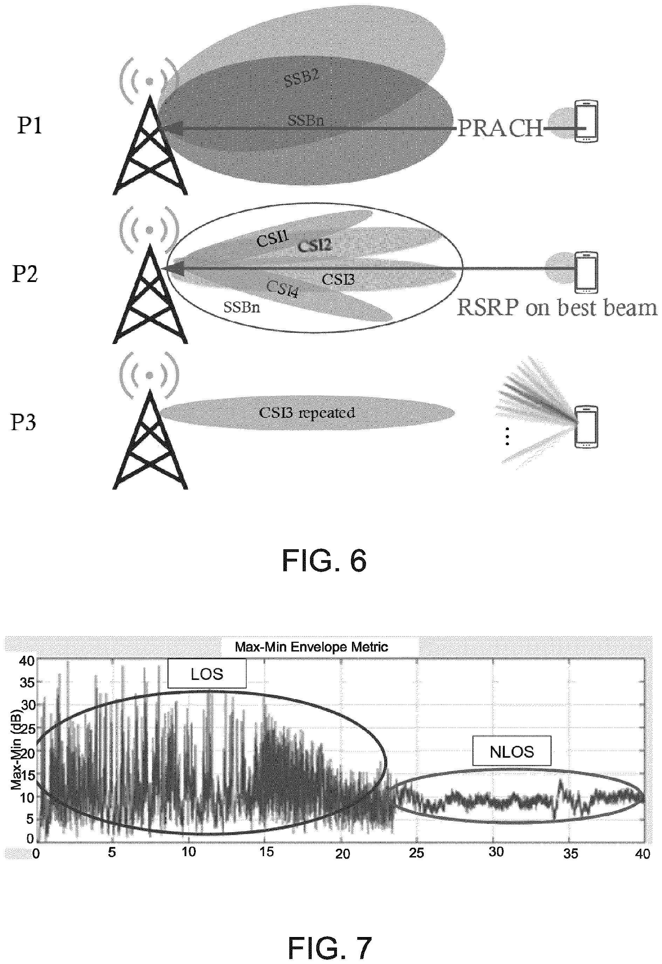

The three phases are illustrated in Figure 6:
- Phase 1 (P1): The UE performs measurements based on periodic SSB burst transmissions for selection of the best wide gNB beams, with a typical periodicity of 20 ms. In case of MPUE, selecting best panel across all received SSB blocks is required during P1.
- Phase 2 (P2): The UE performs measurements based on Channel State Information-Reference Signal (CSI-RS) or SSB reference symbols for gNB narrow beam refinement.
- Phase 3 (P3): The UE performs measurements based on a repeated CSI-RS reference symbol for UE narrow beam refinement.

P1, P2 and P3 are continuously being utilized and the best link being tracked and reported (e.g. based on their reference signal received power (L1-RSRP) value or signal-to-interference+noise ratio (SINR) values) to assist the serving cell to control the serving beam. For L1-RSRP measurements, from the configured up to 64 SSB (or CSI-RS) resources up to 4 best SSB resource indicator-RSRP (SSBRI-RSRP) may be reported according to TS 38.214.

However, if the UE mobility is low, gNB (re-)configures only few SSB (or CSI-RS) resources to measure and one L1-RSRP to report. Even in such case, an MPUE needs to continuously scan all panels (and beams) to obtain the best RSRP out of all panels to account for unpredictable UE behaviour (e.g. rotations).

There are typically a plurality of modulation and coding schemes (MCS) available for the UE, wherein along a higher signal quality a higher MCS can be selected and thereby obtain improved spectral efficiency and higher throughput. Typically, an improvement of 2 - 5 dB in signal quality is required for changing from a lower MCS to the next MCS.

Figure 7 shows an example of received signal power measurements at a UE provided with 4 orthogonal receivers and simultaneous reception. The curve indicates the max-min amplitude characteristics of the combined received signal, over time and location, when the UE moves from line-of-sight (LOS) condition to non-line-of-sight (NLOS) condition from a probe gNB. When the UE moves in the LOS region, the high variance of the curve can also be interpreted as indicating a lot of reflections with different power in the environment.

When the UE moves in the NLOS region, the low variance of the curve indicates that there are little reflections to improve the reception even if the UE moves or rotates. As seen from the measurements, the range of variations in the NLOS environment is much lower than in LOS environment. Thus, despite the utilization of 4 simultaneous orthogonal receivers at the UE, the curve shows a quasi-flat behaviour in the NLOS region, indicating that little to no benefit in the received signal power can be achieved by receiving the signal at a new/different angle.

As illustrated by Figure 7, in some situations (e.g. NLOS situations) there may be no predominant direction of the signal, but rather temporary energy peaks in some directions. This means that an MPUE may end up changing the serving panel/beam frequently when performing local beam management. However, such changing of the serving panel/beam provides only a small gain in SINR but no effective gain in spectral efficiency. In other words, if the gain in signal quality is too small to cause a change to a higher MCS (i.e., lower than the difference between the SNR on the active panel and the minimum SNR of the next MCS), then a change to different panel and/or beam providing only a small SNR improvement will not improve link throughput since the MCS is not switched. In such cases, chasing of the best panel becomes redundant and only consumes more power at the UE, with no effective throughput improvement.

As also illustrated by Figure 7, in some LOS situations the RSRP and/or SINR measured on one panel is much larger than the RSRP and/or SINR measured on other panels, indicating a possible LOS situation with high Rician factor K (i.e. the ratio of signal power in dominant (LOS) component over the local scattered power). Also in such a case, the chasing of the best panel becomes redundant and only consumes more power at the UE, with no effective throughput improvement.

Consequently, performing measurements in these scenarios consumes power at the MPUE without any benefit in link performance. In addition, continuous measurements on different panels also impacts the DL throughput, since a MPUE will not be able to receive data possibly multiplexed with a reference signal while performing measurements of the reference signal on a panel different than the current active (i.e. best RSRP and/or SINR) panel.

In the following, an enhanced method for beam management will be described in more detail, in accordance with various embodiments.

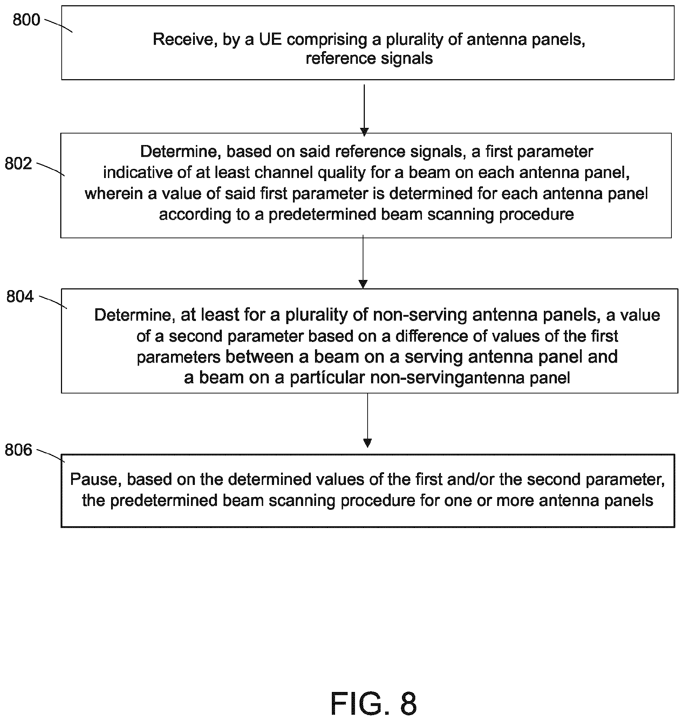

The method, which is disclosed in flow chart of Figure 8 as reflecting the operation of a terminal apparatus, such as a user equipment (UE), wherein the method comprises receiving (800), by a user equipment comprising a plurality of antenna panels for receiving beams, reference signals; determining (802), based on measurements of said reference signals, a first parameter indicative of at least channel quality for a beam on each antenna panel, wherein a value of said first parameter is determined for each antenna panel according to a predetermined beam scanning procedure; determining (804), at least for a plurality of non-serving antenna panels, a value of a second parameter based on a difference of values of the first parameters between a beam on a serving antenna panel and a beam on a particular non-serving antenna panel; and pausing (806), based on the determined values of the first and/or the second parameter, the predetermined beam scanning procedure for one or more antenna panels.

Thus, the method reduces the number of measurements carried out by the UE to limit the power consumption and to optimize the downlink throughput especially in cases, where changing of the serving panel/beam provides only a small gain in signal quality but no effective gain in spectral efficiency due to no change of the MCS. The UE initially measures, based on the received reference signals, such as synchronization signals, a first parameter indicative of channel quality for beams on each antenna panel according to a certain beam scanning procedure. The UE then determines second parameter values, each describing the difference of the values of the first parameter as measured by the serving panel and as measured by at least a plurality of, possibly all, other panels. This gives an estimation about how much the channel quality varies across the antenna panels of the UE; i.e. how much is the difference in the signal level measured by the serving panel and the signal level measured by the non-serving panels. Depending on the values of the first and/or the second parameter, the UE may pause the predetermined beam scanning procedure for one or more antenna panels, e.g. possibly for all non-serving antenna panels, thereby obtaining savings in the power consumption.

According to an embodiment, the method comprises comparing the values of the second parameter to a first threshold value, wherein said first threshold value is a difference between the current value of the first parameter measured on the serving antenna panel and a minimum value of the first parameter required for the change of the modulation and coding scheme wherein said means for pausing is configured to pause the predetermined beam scanning procedure for antenna panels having the value of the second parameter below the first threshold.

Thus, the values of the second parameter for each of said plurality of non-serving antenna panels are compared to a first threshold value, such as an MCS-specific threshold value. The comparison may indicate that changing the serving panel/beam to a particular non-serving antenna panel does not cause the change of the MCS, and thereby provides no effective gain in spectral efficiency. Such situation may occur e.g. in non-line-of sight (NLOS) condition, where no predominant signal can be detected. If changing the serving panel/beam to a particular non-serving antenna panel does not cause the change of the MCS, the UE ceases temporarily to carry out measurements at least on such non-serving antenna panels. This may be referred to as temporary relaxation of panel scanning when the UE realizes that no gain can be achieved by continuous measurements. This reduces the power consumption of the UE and also enables to increase the downlink throughput by utilizing time slots previously used for the measurements on the non-serving antenna panels.

According to an embodiment, the method comprises comparing the value of the first parameter measured on the serving panel to the value of the first parameter measured on the particular non-serving panel; and pausing the predetermined beam scanning procedure for the particular non-serving antenna panels having the value of the first parameter below the value of the first parameter for the serving antenna panel by at least a second threshold.

Hence, the value of the first parameter measured on the serving panel is compared to the value of the first parameter measured on the particular non-serving panel, thereby determining a difference between the value of the first parameter of the serving panel and each of the plurality of the non-serving panels. Said differences are compared to a second threshold value for each of said plurality of non-serving antenna panels. For example, in line-of sight (LOS) condition, the active panel is assumed to be the one with best values of first parameter. If it turns out that the UE is receiving the incoming signal on the active panel with much larger values of the first parameter than on other panels (i.e. larger by at least the second threshold), the continuous scanning of each of such other panels is at least temporarily redundant.

Again, such large differences indicate that changing the serving panel/beam to a particular non-serving antenna panel does not cause the change to a better MCS, whereby the UE enters in the temporary relaxation mode and ceases temporarily to carry out measurements at least on such non-serving antenna panels.

According to an embodiment, said first parameter indicative of the observed channel quality is signal-to-interference+noise ratio (SINR) or reference signal received power (RSRP).

Hence, SINR may be used as a descriptive and generic metric to characterize the observed channel conditions of a particular UE panel/beam, but any other metric (e.g. RSRP) may be used herein without impacting the applicability of the embodiments.

The first threshold value may be referred to as X, for example, and it may be a value given in dBs. The first threshold value may be set equal to the difference between the current measured SINR and the minimum SINR needed to allow change of modulation and coding scheme to the next MCS. Thus, the first threshold value indicates the required change in the current value of the first parameter of the serving antenna panel so as to have impact on the MCS selection.

The second threshold value may be referred to as Y, for example, and it may be a value given in dBs. The second threshold value may be set such that it provides a sufficient buffer such that the difference between the value of the first parameter of the serving panel and the particular non-serving panel, i.e. , ΔSINR, does not have a high probability to lead into situation, where the value of the first parameter measured on the particular non-serving panel would be larger than the value of the first parameter measured on the serving panel within a short time period. As an opposite example of a non-serving panel not fulfilling the condition (ΔSINR>Y) is a strong reflection received by a non-serving panel of a UE in LOS situation, wherein the SINR measured on the non-serving panel has a lower value than SINR measured on the serving panel but not sufficiently low to be discarded.

According to an embodiment, the method comprises continuing to measure the first parameter indicative of the channel quality on the serving antenna panel; comparing the value of the first parameter measured on the serving panel to a third threshold value; and continuing the predetermined beam scanning procedure across all antenna panels in response to the value of the first parameter measured on the serving panel is below the third threshold value.

Thus, the UE may continue to measure the first parameter indicative of the channel quality at least on the serving antenna panel/beam so as to remain updated about the channel quality of the current antenna panel/beam, even if residing in the relaxation mode. The UE may continue to evaluate if the measured signal quality of the active panel reaches to one or more predefined thresholds. The thresholds may be related to radio channel condition observed by the UE according to a received signal level. If the value of the first parameter, such as the signal quality measured on the serving panel is below a predefined (third) threshold value, thus indicating a reduced signal quality, the UE continues the predetermined beam scanning procedure across all antenna panels and aims to find another beam and/or antenna panel with better signal quality.

According to an embodiment, the third threshold value is based on the modulation and coding scheme used on the serving antenna panel.

The third threshold may specify a signal quality threshold value, e.g. in terms of a value of SINR or RSRP, related to the current MCS. The third threshold may be used to ensure that the signal quality, such as SINR, of the active panel does not fall below the minimum signal quality SINR of the active MCS.

According to an embodiment, the method comprises continuing the predetermined beam scanning procedure across all antenna panels in response to a timer set upon said pausing expires.

Thus, since the channel condition typically evolve in time, a timer may be used to guarantee that the UE optimally balances power savings with link performance. The originally determined values for the second parameter may not hold anymore after a certain duration, and setting the timer to expire at a reasonable time ensures that the UE returns to the predetermined beam scanning procedure to re-determine the values for the second parameter. The timer value may be related to UE's mobility, e.g. for an UE with faster mobility the timer value may be shorter to address the faster evolving channel conditions, and vice versa.

According to an embodiment, the method comprises continuing the predetermined beam scanning procedure across all antenna panels in response to a change of a beam on the serving antenna panel.

Hence, if the UE determines to change the serving beam, e.g. due to changed signalling conditions, the UE continues the predetermined beam scanning procedure across all antenna panels to check if still another beam and/or antenna panel with better signal quality is available due to the changed signalling conditions.

In the following, some example embodiments are illustrated using SINR as the metric of the channel conditions of a particular UE panel/beam, but as mentioned above, any other metric (e.g. RSRP) may be as well.

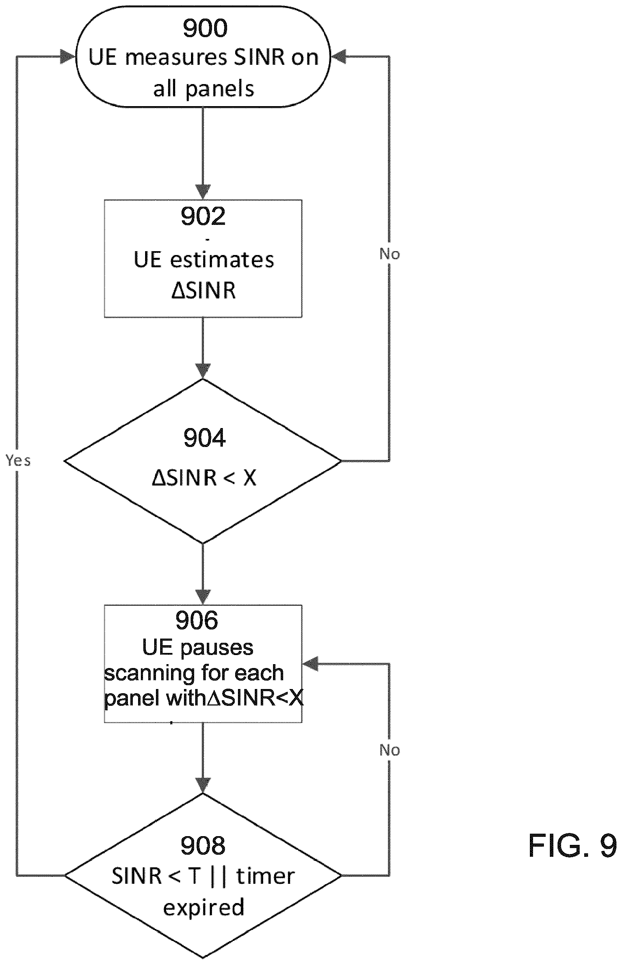

The flowchart of Figure 9 illustrates various embodiments for optimization of UE beam management in a NLOS case, where there is no predominant direction of the signal. Initially, the UE measures SINR on all panels according to a specified beam management procedure (900). The UE then estimates the variation of SINR, i.e. ΔSINR, across all panels (902). It is noted that instead of all panels, ΔSINR may be estimated only for a subset of (non-serving) panels

The UE then checks if the variation of SINR, i.e. ΔSINR, across each of a plurality of non-serving panels (i.e. a subset of or all non-serving panels) is below the first threshold value (904), i.e. whether ΔSINR<X. The threshold value X may be defined internally at the UE, or alternatively configured by the network. The value X may be defined in dBs and it may be set equal to the difference between the current measured SINR and the minimum SINR needed to allow change of modulation and coding scheme to the next MCS. As an example, for a UE operating with MCS1 at 7 dB SINR, and if the minimum SINR of MCS2 is equal to 9 dB, then the value of X=2 dB. A value of ΔSINR<X means that the measured non-serving panel/beam at the UE does not provide enough SINR gain to increase the throughput of the link. In such case, the UE relaxes its measurements by pausing scanning of said non-serving panel having ΔSINR<X (906). Skipping measurements at least on a subset of, possibly on all other panels except the current active panel saves power and also avoids the interruption caused in traffic, hence, improves the throughput.

If the value of ΔSINR>=X for a subset of (non-serving) panels, the UE continues to measure SINR on for said subset of (non-serving) panels panels according to the specified beam management procedure (900).

Throughout the measurement relaxation period, the UE may check whether the radio channel condition is degraded (908). This may involve measuring SINR on serving panel/beam against a third threshold T, and/or monitoring whether a timer has expired.

The third threshold T specifies an SINR threshold value related to the current MCS. For example, if MCS1 is characterized by a minimum SINR of 5 dB, the UE pauses scanning only if SINR stays above T=5.5 dB. The third threshold is expected to guarantee that the SINR of the active panel does not fall below the minimum SINR of the active MCS.

The timer, in turn, specifies a time corresponding to expected changes in SINR The timer is expected to guarantee that the UE optimally balances power savings with link performance. Thus, the timer addresses the fact that the channel conditions evolve in time and the drawn metric (ΔSINR) may not hold anymore after a certain duration (timer expiration). The timer value may therefore be related to UE's mobility, i.e. for an UE with faster mobility the timer value may be shorter to address the faster evolving channel conditions, and vice versa.

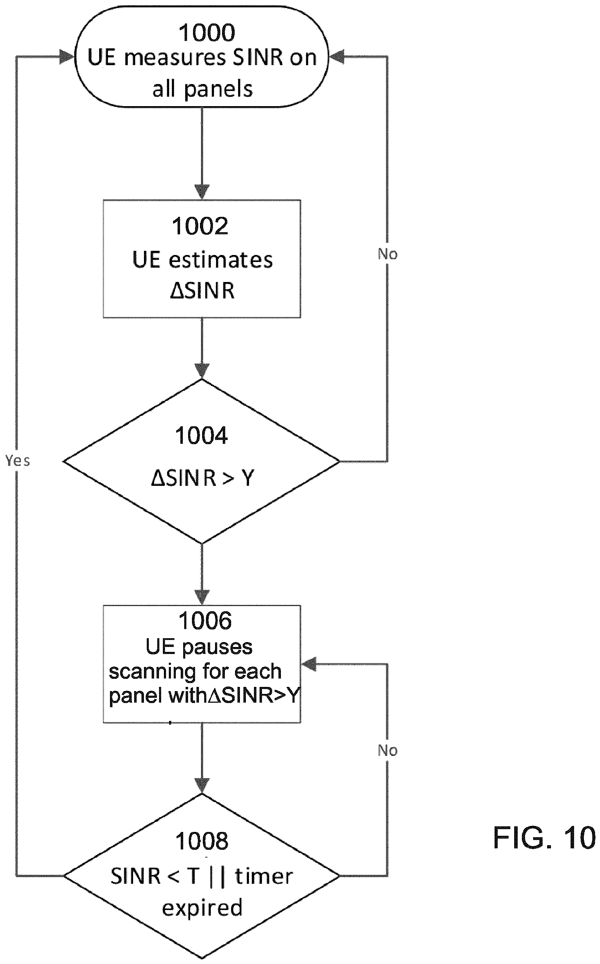

The flowchart of Figure 10, in turn, illustrates various embodiments for optimization of UE beam management in a LOS case, where the SINR measured on one panel is much larger than the SINR measured on other panels. The steps 1000 - 1008 of Figure 10 correspond to the steps of 900 - 908 of Figure 9, except that in step 1004 where the UE checks whether the metric ΔSINR is greater than the second threshold Y (rather than lower as in step 904). In addition, in this case, the variation of SINR, i.e. ΔSINR, indicates the signed difference between the SINR measured on the active panel and the SINR measured on the other panels, since here the active panel is assumed to be the one with best SINR. Indeed, in this case the UE is receiving the incoming signal on the active panel with much larger SINR than on other panels, which makes the continuous scanning of other panels redundant and worth relaxing, at least until the conditions in step 1008 are not satisfied.

According to an embodiment, step 1004 may involve comparing the ΔSINR received on each of the panels independently with the second threshold Y. As a result, the UE obtains knowledge which panels fulfil the condition (ΔSINR>Y) and pauses the scanning only for such panels (1006). The UE may then continue the scanning on the panels providing SINR substantially similar to the serving panel SINR not fulfilling the condition (ΔSINR>Y). This may be applicable for cases in which the UE is in LOS but there is a strong reflection received by a second panel which can be considered similar to the serving panel (lower SINR but not sufficiently low to be discarded).

An apparatus, such as a UE, according to an aspect comprises a plurality of antenna panels for receiving beams; means for receiving reference signals; means for determining, based on measurements of said reference signals, a first parameter indicative of at least channel quality for a beam on each antenna panel, wherein a value of said first parameter is determined for each antenna panel according to a predetermined beam scanning procedure; means for determining, at least for a plurality of non-serving antenna panels, a value of a second parameter based on a difference of values of the first parameters between a beam on a serving antenna panel and a beam on a particular non-serving antenna panel; and means for pausing, based on the determined values of the first and/or the second parameter, the predetermined beam scanning procedure for one or more antenna panels.

According to an embodiment, the apparatus comprises means for comparing the values of the second parameter to a first threshold value, wherein said first threshold value is a difference between the current value of the first parameter measured on the serving antenna panel and a minimum value of the first parameter required for a change of a modulation and coding scheme; wherein said means for pausing is configured to pause the predetermined beam scanning procedure for antenna panels having the value of the second parameter below the first threshold.

According to an embodiment, the apparatus comprises means for comparing the value of the first parameter measured on the serving panel to the value of the first parameter measured on the particular non-serving panel; wherein said means for pausing is configured to pause the predetermined beam scanning procedure for the particular non-serving antenna panels having the value of the first parameter below the value of the first parameter for the serving antenna panel by at least a second threshold.

According to an embodiment, the apparatus comprises means for continuing to measure the first parameter indicative of the channel quality on the serving antenna panel; means for comparing the value of the first parameter measured on the serving panel to a third threshold value, and means for continuing the predetermined beam scanning procedure across all antenna panels in response to the value of the first parameter measured on the serving panel is below the third threshold value.

According to an embodiment, the second threshold value is based on the modulation and coding scheme used on the serving antenna panel.

According to an embodiment, the apparatus comprises means for continuing the predetermined beam scanning procedure across all antenna panels in response to a timer set upon said pausing expires.

According to an embodiment, the apparatus comprises means for continuing the predetermined beam scanning procedure across all antenna panels in response to a change of a beam on the serving antenna panel.

According to an embodiment, said first parameter indicative of at least the channel quality is signal-to-interference+noise ratio (SINR) or reference signal received power (RSRP) measured on a configured reference signal from a serving network node.

An apparatus according to a further aspect comprises a plurality of antenna panels, at least one processor and at least one memory, said at least one memory stored with computer program code thereon, the at least one memory and the computer program code configured to, with the at least one processor, cause the apparatus at least to perform: receive reference signals; determine, based on measurements of said reference signals, a first parameter indicative of at least channel quality for a beam on each antenna panel, wherein a value of said first parameter is determined for each antenna panel according to a predetermined beam scanning procedure; determine, at least for a plurality of non-serving antenna panels, a value of a second parameter based on a difference of values of the first parameters between a beam on a serving antenna panel and a beam on a particular non-serving antenna panel; and pause, based on the determined values of the first and/or the second parameter, the predetermined beam scanning procedure for one or more antenna panels.

According to an embodiment, the apparatus comprises code configured to, with the at least one processor, cause the apparatus at least to compare the values of the second parameter to a first threshold value, wherein said first threshold value is a difference between the current value of the first parameter measured on the serving antenna panel and a minimum value of the first parameter required for a change of a modulation and coding scheme; and pause the predetermined beam scanning procedure for antenna panels having the value of the second parameter below the first threshold.

According to an embodiment, the apparatus comprises code configured to, with the at least one processor, cause the apparatus at least to compare the value of the first parameter measured on the serving panel to the value of the first parameter measured on the particular non-serving panel; and pause the predetermined beam scanning procedure for the particular non-serving antenna panels having the value of the first parameter below the value of the first parameter for the serving antenna panel by at least a second threshold.

According to an embodiment, the apparatus comprises code configured to, with the at least one processor, cause the apparatus at least to continue to measure the first parameter indicative of the channel quality on the serving antenna panel; compare the value of the first parameter measured on the serving panel to a third threshold value, and continue the predetermined beam scanning procedure across all antenna panels in response to the value of the first parameter measured on the serving panel is below the third threshold value.

According to an embodiment, the second threshold value is based on the modulation and coding scheme used on the serving antenna panel.

According to an embodiment, the apparatus comprises code configured to, with the at least one processor, cause the apparatus at least to continue the predetermined beam scanning procedure across all antenna panels in response to a timer set upon said pausing expires.

According to an embodiment, the apparatus comprises code configured to, with the at least one processor, cause the apparatus at least to continue the predetermined beam scanning procedure across all antenna panels in response to a change of a beam on the serving antenna panel.

According to an embodiment, said first parameter indicative of at least the channel quality is signal-to-interference+noise ratio (SINR) or reference signal received power (RSRP) measured on a configured reference signal from a serving network node.

Such apparatuses may comprise e.g. the functional units disclosed in any of the Figures 1- 4 for implementing the embodiments.

A further aspect relates to a computer program product, stored on a non-transitory memory medium, comprising computer program code, which when executed by at least one processor, causes an apparatus comprising a plurality of antenna panels for receiving beams at least to perform: receiving, by a user equipment comprising a plurality of antenna panels for receiving beams, reference signals; determining, based on said reference signals, a first parameter indicative of at least channel quality for a beam on each antenna panel, wherein a value of said first parameter is determined for each antenna panel according to a predetermined beam scanning procedure; determining, at least for a plurality of non-serving antenna panels, a value of a second parameter based on a difference of values of the first parameters between a beam on a serving antenna panel and a beam on a particular non-serving antenna panels; and pausing, based on the determined values of the first and/or the second parameter, the predetermined beam scanning procedure for one or more antenna panels.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended examples. However, all such and similar modifications of the teachings of this invention will still fall within the scope of this invention.

## Claims

1. An apparatus comprising:
a plurality of antenna panels for receiving beams;
means for receiving reference signals;
means for determining, based on measurements of said reference signals, a first parameter indicative of at least channel quality for a beam on each antenna panel, wherein a value of said first parameter is determined for each antenna panel according to a predetermined beam scanning procedure;
means for determining, at least for a plurality of non-serving antenna panels, a value of a second parameter based on a difference of values of the first parameters between a beam on a serving antenna panel and a beam on a particular non-serving antenna panel; and
means for pausing, based on the determined values of the first and/or the second parameter, the predetermined beam scanning procedure for one or more antenna panels.

2. The apparatus according to claim 1, comprising
means for comparing the values of the second parameter to a first threshold value, wherein said first threshold value is a difference between the current value of the first parameter measured on the serving antenna panel and a minimum value of the first parameter required for a change of a modulation and coding scheme;
wherein said means for pausing is configured to pause the predetermined beam scanning procedure for antenna panels having the value of the second parameter below the first threshold.

3. The apparatus according to claim 1, comprising
means for comparing the value of the first parameter measured on the serving panel to the value of the first parameter measured on the particular non-serving panel;
wherein said means for pausing is configured to pause the predetermined beam scanning procedure for the particular non-serving antenna panels having the value of the first parameter below the value of the first parameter for the serving antenna panel by at least a second threshold.

4. The apparatus according to any preceding claim, comprising
means for continuing to measure the first parameter indicative of the channel quality on the serving antenna panel;
means for comparing the value of the first parameter measured on the serving panel to a third threshold value, and
means for continuing the predetermined beam scanning procedure across all antenna panels in response to the value of the first parameter measured on the serving panel is below the third threshold value.

5. The apparatus according to claim 4, wherein the second threshold value is based on the modulation and coding scheme used on the serving antenna panel.

6. The apparatus according to any preceding claim, comprising
means for continuing the predetermined beam scanning procedure across all antenna panels in response to a timer set upon said pausing expires.

7. The apparatus according to any preceding claim, comprising
means for continuing the predetermined beam scanning procedure across all antenna panels in response to a change of a beam on the serving antenna panel.

8. The apparatus according to any preceding claim, wherein
said first parameter indicative of at least the channel quality is signal-tointerference+noise ratio (SINR) or reference signal received power (RSRP) measured on a configured reference signal from a serving network node.

9. A method comprising:
receiving, by a user equipment comprising a plurality of antenna panels for receiving beams, reference signals;
determining, based on measurements of said reference signals, a first parameter indicative of at least channel quality for a beam on each antenna panel, wherein a value of said first parameter is determined for each antenna panel according to a predetermined beam scanning procedure;
determining, at least for a plurality of non-serving antenna panels, a value of a second parameter based on a difference of values of the first parameters between a beam on a serving antenna panel and a beam on a particular non-serving antenna panel; and
pausing, based on the determined values of the first and/or the second parameter, the predetermined beam scanning procedure across one or more antenna panels.

10. The method according to claim 9, comprising
comparing the values of the second parameter to a first threshold value, wherein said first threshold value is a difference between the current value of the first parameter measured on the serving antenna panel and a minimum value of the first parameter required for a change of a modulation and coding scheme; and
pausing the predetermined beam scanning procedure for antenna panels having the value of the second parameter below the first threshold.

11. The method according to claim 9, comprising
comparing the value of the first parameter measured on the serving panel to the value of the first parameter measured on the particular non-serving panel; and
pausing the predetermined beam scanning procedure for the particular non-serving antenna panels having the value of the first parameter below the value of the first parameter for the serving antenna panel by at least a second threshold.

12. The method according to any of claims 9 - 11, comprising
continuing to measure the first parameter indicative of the channel quality on the serving antenna panel;
comparing the value of the first parameter measured on the serving panel to a third threshold value, and
continuing the predetermined beam scanning procedure across all antenna panels in response to the value of the first parameter measured on the serving panel is below the third threshold value.

13. The method according to claim 12, wherein the second threshold value is based on the modulation and coding scheme used on the serving antenna panel.

14. The method according to any of claims 10 - 13, comprising
continuing the predetermined beam scanning procedure across all antenna panels in response to a timer set upon said pausing expires.

15. The method according to any of claims 10 - 14, comprising
continuing the predetermined beam scanning procedure across all antenna panels in response to a change of a beam on the serving antenna panel.

16. A computer program comprising instructions stored thereon for performing, when executed by a processor of an apparatus, at least the following:
receiving, by a user equipment comprising a plurality of antenna panels for receiving beams, reference signals;
determining, based on said reference signals, a first parameter indicative of at least channel quality for a beam on each antenna panel, wherein a value of said first parameter is determined for each antenna panel according to a predetermined beam scanning procedure;
determining, at least for a plurality of non-serving antenna panels, a value of a second parameter based on a difference of values of the first parameters between a beam on a serving antenna panel and a beam on a particular non-serving antenna panel; and
pausing, based on the determined values of the first and/or the second parameter, the predetermined beam scanning procedure for one or more antenna panels.
